# FASCICULE DE BREVET EUROPEEN

(11) **EP 3 138 150 B1**
(45) Date de publication et mention de la délivrance du brevet: **27.06.2018**
(21) Numéro de dépôt: 15719718.7
(22) Date de dépôt: 30.04.2015
(51) Int. Cl.: H01M 10/6556, H01M 2/10

(54) **DISPOSITIF DE SUPPORT D'UN TUBE, NOTAMMENT D'UN TUBE D'UN ECHANGEUR DE CHALEUR DESTINE A VENIR EN CONTACT D'UNE BATTERIE DE VEHICULE AUTOMOBILE**
VORRICHTUNG ZUR BEFESTIGUNG VON WÄRMETAUSCHERROHREN AN EINER FAHRZEUGBATTERIE
DEVICE TO SUPPORT A HEAT EXCHANGE TUBE IN CONTACT WITH A VEHICLE BATTERY

(30) Priorité: 30.04.2014 FR 1453916
(43) Date de publication de la demande: 08.03.2017
(73) Titulaire: Valeo Systemes Thermiques, 78320 Le Mesnil Saint Denis (FR)
(72) Inventeur: BEAUREPAIRE, Elise, F-72000 Le Mans (FR); DJALLAL, Fethy, F-72000 Le Mans (FR); HERRY, Marc, F-72000 Le Mans (FR); VERON, Julien, F-72000 Le Mans (FR); PREVOST, Jean Christophe, F-72270 Ligron (FR)
(74) Mandataire: Neuviale, Bertrand
(86) Numéro de dépôt international: PCT/EP2015/059608
(87) Numéro de publication internationale: WO 2015/166093

(56) Documents cités:
- EP-A1- 2 337 141
- EP-A1- 2 388 851

## Description

La présente invention concerne un dispositif de support d'un tube, notamment d'un tube d'un échangeur de chaleur destiné à venir en contact d'une batterie de véhicule automobile, en particulier pour le refroidissement de cette batterie.

Les nouvelles motorisations électriques des véhicules automobiles font appel à des batteries de plus en plus puissantes qu'il est nécessaire de thermo réguler, notamment de refroidir.

Il est connu pour cela des échangeurs de chaleur à tubes plats venant en contact avec les surfaces des batteries.

Pour s'assurer d'un bon contact entre la batterie et les tubes, malgré les différents jeux de montage pouvant intervenir, différentes solutions ont été proposées qui demeurent cependant insuffisantes.

L'invention vise à améliorer la situation.

L'invention concerne à cet effet un dispositif support d'un tube, notamment d'un tube d'un échangeur de chaleur destiné à venir contre une batterie de véhicule pour son refroidissement, le dispositif comprenant une base, sur laquelle le tube est destiné à être monté, et un élément de compression, ladite base et ledit élément de compression comprenant une zone de contact, s'étendant le long d'une direction d, dite de contact, ladite base et ledit élément de compression étant destinés à venir en contact par leur zone de contact lorsque ledit élément de compression est sous contraintes.

Selon l'invention, ladite zone de contact de l'élément de compression et/ou ladite zone de contact de la base présente une configuration évolutive le long de ladite direction de contact d. Ledit élément de compression est reçu dans une zone concave ou un évidement de ladite second face, ladite zone concave définissant ladite zone de contact de la base. Grace à la configuration évolutive de la ou des zones de contact, on peut ajuster l'effort de compression du ressort sur la longueur et absorber les éventuels jeux de montage de sorte que le contact entre la batterie et l'échangeur soit optimisé. On pourra en particulier compenser les effets de bord au niveau des extrémités longitudinales de ladite base et/ou dudit élément de compression.

Selon différentes caractéristiques de l'invention qui pourront être prises ensemble ou séparément :
- ladite direction de contact est destinée à être orientée selon une direction longitudinale du tube,
- l'élément de compression comporte des bords configurés pour prendre appui sur une surface d'appui,
- lesdits bords sont positionnés de part et d'autre de ladite zone de contact dudit élément de compression,
- lesdits bords sont au nombre de deux, opposés l'un à l'autre par rapport à la zone de contact,
- lesdits bords s'étendent, en particulier continument, selon la direction de contact d,
- la zone de contact dudit élément de compression et/ou de ladite base est une bande présentant une largeur variable le long de ladite direction de contact d.
- ladite base comprend une première face conformée pour supporter le tube et une seconde face sur laquelle l'élément de compression est destiné à s'appliquer, une fois mis sous contraintes,
- l'élément de compression est un ressort en forme de bande à sommet arrondi, ou en forme sensiblement de gouttière renversée, ledit sommet arrondi du ressort définissant ladite zone de contact de l'élément de compression.

Selon un premier aspect de l'invention :
- ladite zone concave ou évidement présente une profondeur évolutive le long de ladite direction d,
- ladite zone concave ou évidement est moins profonde au niveau de ses extrémités longitudinales.

Selon un second aspect de l'invention qui pourra ou non être combiné avec le premier :
- ledit sommet arrondi du ressort présente un rayon de courbure R variable le long de ladite direction d,
- ledit rayon R est plus petit à chacune des extrémités longitudinales dudit élément de compression,
- ledit rayon R varie de façon linéaire le long de ladite direction d,
- le rapport du rayon le plus petit au plus grand est compris entre 0,5 et 1, de préférence entre 0,7 et 0,9.

L'invention concerne également une base du dispositif de support selon le premier aspect de l'invention évoqué plus haut.

L'invention concerne encore un élément de compression du dispositif de support selon le second aspect de l'invention évoqué plus haut. Un tel élément de compression pourra être configurée pour venir directement en appui contre le tube sans que cela sorte du cadre de l'invention.

L'invention concerne aussi un ensemble d'un échangeur de chaleur, comprenant des tubes, et une pluralité de dispositifs support, tels que décrits plus haut, supportant lesdits tubes.

L'invention concerne encore une batterie comprenant un tel ensemble.

D'autres caractéristiques et avantages de l'invention apparaîtront à la lecture de la description qui suit d'exemples de réalisation donnés à titre illustratif en référence aux dessins annexés, sur lesquels:
- La figure 1 est une vue de coupe transversale d'un dispositif support selon l'invention illustrant comment ledit dispositif permet d'appliquer un tube d'un échangeur thermique contre une batterie.
- la figure 2 est une vue en perspective d'un élément de compression selon un mode de réalisation de l'invention.

Des références numériques identiques sont utilisées pour désigner des éléments identiques ou analogues.

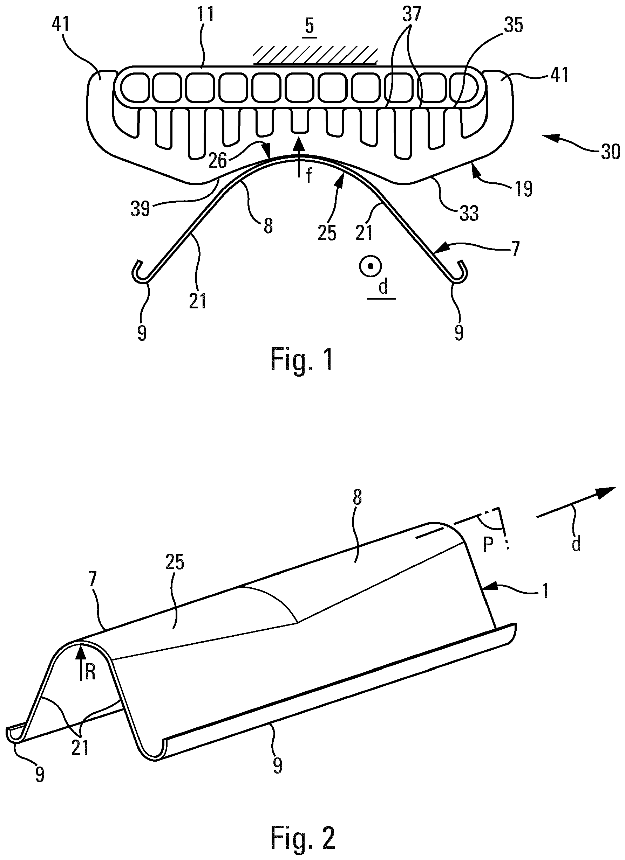

Comme illustré à la figure 1, l'invention concerne tout d'abord un dispositif support d'un tube 11. Il s'agit ici d'un tube 11 d'un échangeur de chaleur destiné à venir contre une batterie 5 de véhicule pour sa thermo régulation, en particulier son refroidissement.

Ledit dispositif comprend une base 19 sur laquelle le tube 11 est monté, et un élément de compression 1. Ladite base 19 et ledit élément de compression 1 présentent une zone 25 de contact, s'étendant le long d'une direction d, dite de contact, ladite base 19 et ledit élément de compression 1 étant destinés à venir en contact par leur zone de contact lorsque ledit élément de compression 1 est sous contraintes. Avantageusement, ladite direction de contact est destinée à être orientée selon une direction longitudinale du tube, à savoir ici une direction orthogonale au plan de la figure.

Toujours à la figure 1, l'élément de compression 1 est illustré au repos et les zones de contact 25 dudit élément de compression 1 et de ladite base 19 restent à distance. Lorsque ledit élément de compression 1 est par contre sous contraintes, l'élément de compression 1 est appliqué contre la base 19 et il se déforme. Leur zone de contact 25 se trouvent alors l'une contre l'autre. L'élément de compression 1 exerce de la sorte un effort sur la base 19, au niveau de leur zone de contact 25, effort qui est transmis au tube 11 qui est ainsi plaqué contre la batterie 5.

Le dispositif est disposé en particulier sous la batterie 5 et il est destiné à plaquer le ou les tubes 11 de l'échangeur de chaleur 3 contre une face de dessous de la batterie 5.

Ladite base 19 comporte avantageusement une première face 35 conformée pour supporter le tube 11 de façon isolée thermiquement et une seconde face 33 sur laquelle l'élément de compression 1 est destiné à être appliqué lorsque ce dernier est mis sous contraintes.

Lesdites première et seconde faces 33, 35 sont avantageusement opposées l'une à l'autre, de sorte que l'effort appliqué par l'élément de compression 1 sur la seconde face 33, selon la flèche f de la figure, est transmis directement au tube 11 par la première face 35.

On pourrait encore prévoir un renvoi de l'effort dans une direction orientée inclinée, autre que celle de l'exemple.

Ladite base 19 est avantageusement pourvue de nervures 37 sur sa première face, destinées à être appliquées sur le tube par leur extrémité, ce qui renforce un maintien isolé thermiquement du tube par la base. Cette isolation thermique résulte également de la matière de la base, avantageusement isolante de la chaleur, par exemple en matière plastique isolante. Une isolation électrique avec le tube est également assurée.

Ladite base 19 est avantageusement configurée pour être montée en clippage sur le ou lesdits tubes 11. Pour cela, ladite base 19 est ici pourvue de parties de clippage 41 du tube, notamment de pattes 41 de maintien du tube sur ses cotés longitudinaux. Ces pattes 41 sont aptes à prendre en tenaille, par clippage, le tube sans faire contact avec la batterie.

Des éléments de liaison de l'élément de compression au support intermédiaire peuvent en outre être prévus, non représentés, par exemple des crochets disposés régulièrement sur la longueur de la base, montés traversant dans l'élément de compression.

Ledit élément de compression 1 comprend, par exemple, une armature 7 à effet ressort configurée pour prendre appui sur une surface d'appui, qui peut être celle du logement de la batterie 5, par exemple un boîtier de logement de la batterie monté sur le véhicule, non représenté. Ladite armature 7 à effet ressort est munie, par exemple, de deux bords 9 opposés et parallèles, destinés à s'étendre également selon la direction d de contact. Lesdits bords 9 sont ici configurés pour s'appliquer de façon continue contre le support. Il pourra s'agir de bords pliés.

Alternativement, l'armature peut comporter plus que deux bords, ces derniers n'étant pas nécessairement parallèles.

La force de compression du ressort doit être d'une amplitude suffisante pour exercer le plaquage du tube 11 contre la batterie 5, ce qui implique de configurer l'armature ressort, notamment en raideur, à cet effet.

L'armature 7 est ici un ressort en forme de bande à sommet 8 arrondi, c'est à dire en forme sensiblement de gouttière renversée. Ledit sommet 8 du ressort est apte à être disposé, en compression, en contact contre ladite base 19 dudit tube. Autrement dit, ledit sommet 8 définit ladite zone de contact 25 dudit élément de compression 1. Ladite zone de contact 25 peut ici être assimilée à une bande de contact, en particulier située de part et d'autre d'un plan longitudinal médian P.

Ledit sommet 8 s'étend le long de ladite direction de contact d, notamment sur la longueur de la base 19 qui pourra sensiblement correspondre à celle du tube 11. Ladite bande de ressort est apte à être montée flexible sur la surface d'appui pour s'appliquer contre ladite base 19.

Ladite bande de ressort 7 comporte ici deux jambes opposées 21, notamment symétriques par rapport au plan longitudinal médian P de la bande. Lesdites jambes 21 sont configurées pour être mobiles sur la surface d'appui, notamment par leurs bords 9.

Ainsi configurée, ladite armature 7 exerce en compression un effort sur ledit échangeur par ledit sommet 8, à savoir une poussée contre le tube 11 qui met en contact le tube et la batterie en vue d'un transfert thermique de l'un à l'autre.

Ladite bande de ressort 7 est avantageusement d'épaisseur égale à environ 0,1 à 0,4 mm, de préférence d'épaisseur comprise entre 0.15 et 0.2 mm, constituée de matière métallique, notamment d'acier à haute caractéristique élastique, ce qui confère une bonne capacité de flexion pour exercer ledit plaquage de l'échangeur contre la batterie.

Ladite bande de ressort 7 a, par exemple, une longueur comprise entre 200 et 500 millimètres, adaptée à la longueur du ou desdits tubes 11.

Selon l'invention, ladite zone de contact de l'élément de compression 1 et/ou ladite zone de contact de la base 19 présente une configuration évolutive le long de la direction de contact d. On peut de la sorte obtenir un effort plus constant tout le long dudit dispositif de compression. On évite ainsi l'existence d'un jeu entre la batterie 5 et le tube 11, en particulier au niveau des extrémités longitudinales dudit tube 11.

Comme illustré à la figure 2, selon un premier mode de réalisation de l'invention, ledit sommet 8 présente un rayon R variable sur la longueur de ce dernier, par exemple il décroit du milieu jusqu'à l'extrémité comme ici.

Ainsi, grâce à ladite armature ressort 7, dont le rayon R de sommet est variable sur la longueur, on peut ajuster l'effort de compression du ressort sur la longueur et absorber les éventuels jeux de montage, de sorte que le contact entre la batterie et l'échangeur soit optimisé.

Les bords 9 demeurant parallèles, la hauteur du sommet relativement à la surface d'appui varie, en étant notamment plus grande pour s'adapter à un rayon plus petit. Cela s'observe au repos et à la compression, le contact s'établit sur le tube, le long de sa surface.

Le rayon R de sommet est avantageusement plus petit au moins à une extrémité longitudinale du sommet, par exemple comme ici à chacune des extrémités longitudinales du sommet ou extrémités longitudinales de la bande ressort. La hauteur dudit sommet relativement à la surface d'appui, plus grande au niveau de l'extrémité, au repos, accroit la force de compression du ressort à ladite extrémité et compense l'effet de bord réducteur de la force de compression du ressort à ce niveau.

Le rayon de section du sommet varie, notamment, de façon linéaire en longueur, avantageusement de façon symétrique relativement à un plan transversal médian, en sorte que ladite force de compression croit linéairement du milieu à chaque extrémité.

Le rapport du rayon le plus petit au plus grand peut être compris entre 0,5 et 1, de préférence entre 0,7 et 0,9, en particulier de 0,8 et 0,9,

Si l'on revient à la figure 1, on constate que ledit sommet arrondi 8 du ressort est avantageusement reçu dans une zone concave ou un évidement 39 de ladite seconde face, ce qui permet de faciliter le maintien en position du ressort sur la seconde face. Ladite zone concave ou évidement 39 définit ici ladite zone de contact 25 de ladite base 19.

Selon un autre mode de réalisation de l'invention, non-illustré, ladite zone concave ou évidement 39 présente une profondeur évolutive le long de ladite direction d. Ladite zone concave ou évidement 39 pourra en particulier être moins profonde au niveau de ses extrémités longitudinales. Une telle mesure, éventuellement combinée à une variation du rayon de courbure du sommet 8 du ressort, permet également de favoriser l'homogénéité des efforts transmis au tube 11.

Ledit évidement 39 pourra en outre conformé selon l'exemple pour correspondre à une extension maximale du ressort, notamment en étant adapté à la variation du rayon R, de sorte que, en compression, ledit évidement corresponde par sa forme au sommet du ressort.

L'invention apporte ainsi une solution simple, fiable et facile à mettre en oeuvre pour assurer un transfert thermique efficace entre une batterie de véhicule et un échangeur de chaleur.

En variante, l'élément de compression 1 appuie ainsi sur le ou lesdits tubes 11 sans base ou partie support intermédiaire 19. Autrement dit, l'effort imprimé par le ressort 7 est directement exercé sur le ou lesdits tubes 11 de l'échangeur.

Ledit échangeur comprend, par exemple, une pluralité de tubes 11, chacun muni d'un dispositif de support tel que décrit plus haut. A la figure 1, l'un desdits tubes est représenté en coupe transversal. Il s'agit ici d'un tube plat, notamment extrudé, muni d'une pluralité de canaux de passage d'un liquide caloporteur, notamment un liquide de refroidissement tel que de l'eau additionnée d'antigel. Ledit tube 11 comprend deux grandes faces, l'une située en contact de ladite base 19 et l'autre située en contact de ladite batterie 5. En variante, un même dispositif de support pourra être utilisé pour supporter plusieurs tubes dudit échangeur.

Bien que non illustré, ledit échangeur comprend en outre, par exemple, des collecteurs dans lesquels lesdits tubes débouchent à chacune de leurs extrémités longitudinales. Lesdits tubes sont avantageusement disposé dans un même plan, parallèle à leur grandes faces, de façon à pouvoir venir en contact d'une surface sensiblement plane de la batterie.

## Revendications

1. Dispositif support d'un tube (11), notamment d'un tube d'un échangeur de chaleur destiné à venir contre une batterie (5) de véhicule pour son refroidissement, le dispositif comprenant une base (19), sur laquelle le tube (11) est destiné à être monté, et un élément de compression (1), ladite base (19) et ledit élément de compression (1) comprenant une zone (25) de contact, s'étendant le long d'une direction d, dite de contact, ladite base (19) et ledit élément de compression (1) étant destinés à venir en contact par leur zone de contact (25) lorsque ledit élément de compression (1) est sous contraintes, ladite zone de contact de l'élément de compression (1) et/ou ladite zone de contact de la base (19) présentant une configuration évolutive le long de ladite direction de contact d, ladite base (19) comprenant une première face (35) conformée pour supporter le tube (11) et une seconde face (33) sur laquelle l'élément de compression (1) est destiné à s'appliquer, une fois sous contraintes, ledit élément de compression (1) étant reçu dans une zone concave ou évidement (39) de ladite seconde face (33), ladite zone concave ou évidement (39) définissant ladite zone de contact (25) de ladite base (19) et présentant une profondeur évolutive le long de ladite direction d.

2. Dispositif selon la revendication précédente dans lequel la zone de contact (25) dudit élément de compression (1) et/ou de ladite base (19) est une bande présentant une largeur variable le long de ladite direction de contact d.

3. Dispositif selon l'une des revendications précédentes, dans lequel ladite zone concave ou évidement (39) est moins profonde au niveau de ses extrémités longitudinales.

4. Dispositif selon l'une quelconque des revendications précédentes, dans lequel l'élément de compression (1) est un ressort en forme de bande (7) à sommet (8) arrondi, ou en forme sensiblement de gouttière renversée, ledit sommet (8) arrondi du ressort définissant ladite zone de contact (25) dudit élément de compression (1) et présentant un rayon de courbure R variable le long de ladite direction d.

5. Dispositif selon la revendication précédente, dans lequel ledit rayon R est plus petit à chacune des extrémités longitudinales dudit élément de compression (1).

6. Dispositif selon l'une quelconque des revendications 4 ou 5, dans lequel ledit rayon R varie de façon linéaire le long de ladite direction d.

7. Dispositif selon l'une quelconque des revendications 4 à 6, dans lequel le rapport du rayon le plus petit au plus grand est compris entre 0,5 et 1, de préférence entre 0,7 et 0,9,

8. Ensemble d'un échangeur de chaleur, comprenant des tubes (11), et une pluralité de dispositifs support, selon l'une quelconque des revendications 1 à 7, supportant lesdits tubes (3).

9. Batterie comprenant un ensemble selon la revendication 8.

## Patentansprüche

1. Stützvorrichtung für ein Rohr (11), insbesondere für ein Rohr eines Wärmetauschers, der zum Anordnen an einer Fahrzeugbatterie (5) zum Kühlen ausgebildet ist, wobei die Vorrichtung eine Basis (19), zur Montage auf dieser das Rohr (11) ausgebildet ist, und ein Druckelement (1) umfasst, wobei die Basis (19) und das Druckelement (1) einen sich entlang einer sogenannten Kontaktrichtung d erstreckenden Kontaktbereich (25) umfassen, wobei die Basis (19) und das Druckelement (1) ausgebildet sind, durch ihren Kontaktbereich (25) in Kontakt zu kommen, wenn das Druckelement (1) unter Belastung steht, wobei der Kontaktbereich des Druckelements (1) und/oder der Kontaktbereich der Basis (19) eine evolutive Konfiguration entlang der Kontaktrichtung d aufweisen, wobei die Basis (19) eine zum Stützen des Rohrs (11) ausgebildete erste Fläche (35) und eine zweite Fläche (33), zum Anbringen auf dieser das Druckelement (1) ausgebildet ist, sobald es unter Belastung steht, umfasst, wobei das Druckelement (1) in einem konkaven Bereich oder einer Vertiefung (39) der zweiten Fläche (33) aufgenommen wird, wobei der konkave Bereich oder die Vertiefung (39) den Kontaktbereich (25) der Basis (19) definiert und eine evolutive Konfiguration entlang der Richtung d aufweist.

2. Vorrichtung nach dem vorhergehenden Anspruch, wobei der Kontaktbereich (25) des Druckelements (1) und/oder der Basis (19) ein Band mit einer variablen Breite entlang der Kontaktrichtung d ist.

3. Vorrichtung nach einem der vorhergehenden Ansprüche, wobei der konkave Bereich oder die Vertiefung (39) an den Längsenden weniger tief ist.

4. Vorrichtung nach einem der vorhergehenden Ansprüche, wobei das Druckelement (1) eine Feder in der Form eines Bands (7) mit abgerundeter Oberseite (8) oder in der Form im Wesentlichen einer umgekehrten Rinne ist, wobei die abgerundete Oberseite (8) der Feder den Kontaktbereich (25) des Druckelements (1) definiert und einen entlang der Richtung d variablen Krümmungsradius R aufweist.

5. Vorrichtung nach dem vorhergehenden Anspruch, wobei der Radius R an jedem der Längsenden des Druckelements (1) kleiner ist.

6. Vorrichtung nach einem der Ansprüche 4 oder 5, wobei der Radius R linear entlang der Richtung d variiert.

7. Vorrichtung nach einem der Ansprüche 4 bis 6, wobei das Verhältnis vom kleinsten zum größten Radius zwischen 0,5 und 1, vorzugsweise zwischen 0,7 und 0,9, beträgt.

8. Anordnung eines Wärmetauschers umfassend Rohre (11) und eine Vielzahl von Stützvorrichtungen nach einem der Ansprüche 1 bis 7 zum Stützen der Rohre (3).

9. Batterie umfassend eine Anordnung nach Anspruch 8.

## Claims

1. Support device for a tube (11), in particular for a tube of a heat exchanger intended to come up against a vehicle battery (5) for the purpose of its cooling, the device comprising a base (19), on which the tube (11) is intended to be mounted, and a compression element (1), said base (19) and said compression element (1) comprising a contact zone (25), extending in a direction d, known as the direction of contact, said base (19) and said compression element (1) being intended to come into contact via their contact zone (25) when said compression element (1) is under stress, said contact zone of the compression element (1) and/or said contact zone of the base (19) exhibiting an evolutive configuration in said direction of contact d, said base (19) comprising a first face (35) configured in order to support the tube (11) and a second face (33) to which the compression element (1) is intended to be applied, once under stress, said compression element (1) being received in a concave zone or a recess (39) of said second face (33), said concave zone or recess (39) defining said contact zone (25) of said base (19) and exhibiting an evolutive depth in said direction d.

2. Device according to the preceding claim, wherein the contact zone (25) of said compression element (1) and/or of said base (19) is a strip exhibiting a variable width in said direction of contact d.

3. Device according to either of the preceding claims, wherein said concave zone or recess (39) is less deep in the area of its longitudinal extremities.

4. Device according to any of the preceding claims, wherein the compression element (1) is a spring in the form of a strip (7) having a rounded peak (8), or substantially in the form of an upside-down gutter, said rounded peak (8) of the spring defining said contact zone (25) of said compression element (1) and exhibiting a variable radius of curvature R in said direction d.

5. Device according to the preceding claim, wherein said radius R is smaller at each of the longitudinal extremities of said compression element (1).

6. Device according to either of Claims 4 and 5, wherein said radius R varies in a linear fashion in said direction d.

7. Device according to any of Claims 4 to 6, wherein the ratio of the smallest radius to the largest radius is comprised between 0.5 and 1, preferably between 0.7 and 0.9.

8. Heat exchanger assembly, comprising tubes (11), and a plurality of support devices, according to any of Claims 1 to 7, supporting said tubes (3).

9. Battery comprising an assembly according to Claim 8.
